# EUROPÄISCHE PATENTANMELDUNG

(11) **EP 4 086 685 A1**
(43) Veröffentlichungstag der Anmeldung: **09.11.2022**
(21) Anmeldenummer: 21172758.1
(22) Anmeldetag: 07.05.2021
(51) Int. Cl.: G02B 21/00, G02B 27/32

(54) **MIKROSKOPIESYSTEM UND VERFAHREN ZUM BETREIBEN EINES MIKROSKOPIESYSTEMS**

(71) Anmelder: Carl Zeiss Meditec AG, 07745 Jena (DE)
(72) Erfinder: Raab, Andreas, 73491 Neuler (DE); Essig, Jonathan, 73450 Neresheim (DE); Ernsperger, Stefan, 73479 Ellwangen (DE); Krieg, Natalie, 73434 Aalen (DE); Müller, Andrè, 89552 Königsbronn (DE)
(74) Vertreter: Ramrath, Lukas

(57) **Zusammenfassung**

Die Erfindung betrifft ein Mikroskopiesystem, umfassend mindestens eine Trackingkamera (30) zur Lageerfassung mindestens eines Markers, wobei das Mikroskopiesystem (1) weiter umfasst:
- mindestens eine Einrichtung zur Bestimmung eines Arbeitsabstands (D),
- mindestens ein bewegliches optisches Element (32), dessen Lage zur Einstellung eines Erfassungsbereichs (EB) der Trackingkamera (30) veränderbar ist und/oder mindestens zwei Trackingbeleuchtungseinrichtungen (27, 27a, 27b, 27c) und mindestens ein optisches Element zur Strahlführung der von den Trackingbeleuchtungseinrichtungen (27, 27a, 27b, 27c) erzeugten Strahlung,
- mindestens eine Steuereinrichtung (7) zur Steuerung des beweglichen optischen Elements (32) und/oder zur Steuerung der Trackingbeleuchtungseinrichtungen (27, 27a, 27b, 27c), wobei die Lage des beweglichen optischen Elements (32) in Abhängigkeit des Arbeitsabstands (D, D1, D2) einstellbar ist und/oder wobei eine Betriebsweise und/oder ein Beleuchtungsbereich der Trackingbeleuchtungseinrichtungen (27, 27a, 27b, 27c) in Abhängigkeit des Arbeitsabstands (D, D1, D2) einstellbar ist,
sowie ein Verfahren zum Betreiben eines Mikroskopiesystems (1).

## Beschreibung

Die Erfindung betrifft ein Mikroskopiesystem und ein Verfahren zum Betreiben eines Mikroskopiesystems.

Aus dem Stand der Technik bekannt sind Mikroskopiesysteme zur vergrößernden Darstellung von Untersuchungsobjekten, insbesondere in medizinischen Anwendungen. Solche Mikroskopiesysteme können insbesondere sogenannte Operationsmikroskope sein. Diese dienen u.a. zur vergrößernden Darstellung von Teilbereichen eines Körpers, um einem Chirurgen bei einem Eingriff eine bessere visuelle Orientierung zu ermöglichen. Operationsmikroskope sind in der Regel beweglich gehaltert, insbesondere an einem Stativ. Dies ermöglicht es einem Benutzer u.a., eine Lage, also eine Position und/oder Orientierung, des Mikroskops zu verändern, beispielsweise um einen Blickwinkel auf einen Untersuchungsbereich zu verändern oder um andere Untersuchungsbereiche zu betrachten.

Die DE 10 2018 206 406 B3 offenbart ein Mikroskopiesystem mit einer Lageerfassungseinrichtung zur Erfassung einer räumlichen Lage eines Targets, wobei die Lageerfassungseinrichtung das mindestens ein Target mit mindestens einem Markerelement und eine Bilderfassungseinrichtung zur optischen Erfassung des Targets umfasst. Ferner offenbart das Dokument, dass das Mikroskopiesystem eine Beleuchtungseinrichtung zur Beleuchtung des Targets umfassen kann. Die offenbarte Lageerfassungseinrichtung kann insbesondere zur Erfassung der Lage eines Instruments, beispielsweise eines medizinischen Instruments, genutzt werden, wenn das Target an dem Instrument befestigt ist. Eine derartige Lageerfassung kann wünschenswert sein, wenn z.B. eine aktuelle Lage des Instruments relativ zu präoperativ erzeugten Daten, beispielsweise MRT- oder CT-Volumendaten, angezeigt soll.

Weiter bekannt ist die US 9,827,054 B2. Diese offenbart das mechanisch assistierte Positionieren von medizinischen Instrumenten während medizinischer Anwendungen. Ebenfalls offenbart ist ein Mikroskop sowie eine Lageerfassung.

Problematisch bei der Lageerfassung mit einer optischen Lageerfassungseinrichtung, insbesondere bei der Detektion eines Targets bzw. von Markern eines Targets in einem Abbild, ist, dass ein Erfassungsbereich einer Trackingkamera (also der Bilderfassungseinrichtung zur Lageerfassung) bei sehr kurzen Arbeitsabständen klein ist, wodurch ein Target leicht aus dem Erfassungsbereich herausbewegt werden kann und dann keine zuverlässige Lageerfassung mehr möglich ist. Auch kann das Problem bestehen, dass eine Auflösung des abgebildeten Targets bzw. Markers zu gering ist, nämlich wenn ein Arbeitsabstand zu groß ist. Ferner problematisch ist, dass bei aktuellen Systemen das erzeugte Abbild bei hohen Arbeitsabständen unterbelichtet bzw. bei kurzen Abständen überbelichtet sein kann. Beide Effekte beeinflussen die Qualität der Lageerfassung in unerwünschter Weise. Insbesondere können diese Effekte zu einer ungenauen und somit nicht zuverlässigen Lageerfassung bzw. zu einer nicht durchführbaren Lageerfassung führen.

Weiter bekannt sind mikroskopexterne Lageerfassungseinrichtungen, die beispielsweise als separate Systeme in einem Operationssaal angeordnet sind. Beispielhaft erwähnt sei die unter der Bezeichnung Polaris Vega VT bekannte optische Lageerfassungseinrichtung der NDI (Northern Digital Inc.). Derartige Erfassungseinrichtungen benötigen extra Bauraum im Operationssaal. Auch problematisch bei derartigen Lageerfassungseinrichtung sind Verdeckungen, beispielsweise wenn sich ein Nutzer zwischen ein Target und die Bilderfassungseinrichtungen einer solchen Lageerfassungseinrichtung bewegt. Hierdurch wird ein Bewegungsbereich von medizinischem Personal eingeschränkt. Ebenfalls erfordert die Lageerfassung mit einer solchen Lageerfassungseinrichtung regelmäßig, ein Target mit mindestens einem Marker auch am Operationsmikroskop anzuordnen, um gewünschte Funktionalitäten bereitzustellen. Das Anbringen von zusätzlichen Targets am Operationsmikroskop erfordert bei einer Wartung in der Regel auch die Demontage solcher Targets, die dann nach der Wartung wieder montiert werden und eine erneute Kalibrierung der Lageerfassungseinrichtung notwendig machen. Ferner benötigen solche mikroskopexternen Lageerfassungseinrichtungen eine starke Beleuchtung, nämlich um Bereiche im Operationssaal auszuleuchten, damit alle interessierenden Targets, die z.B. am Patienten, an einem Instrument und am Mikroskopiesystem angeordnet sind, zuverlässig abgebildet werden können. Ebenfalls benötigen derartige Systeme hochauflösende Bilderfassungseinrichtungen sowie hohe Rechenleistungen zur Auswertung der Abbilder, die zur Lageerfassung notwendig ist.
Weiter nachteilig bei derartigen Lageerfassungseinrichtungen ist eine zunehmende Ungenauigkeit bei großen Abständen zwischen einem Target und den Bilderfassungseinrichtungen.

Es stellt sich daher das technische Problem, ein Mikroskopiesystem sowie ein Verfahren zum Betreiben dieses Mikroskopiesystems zu schaffen, welche eine zuverlässige, genaue und mit reduziertem Bauraumbedarf realisierte Lageerfassung ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Mikroskopiesystem. Das Mikroskopiesystem umfasst ein Mikroskop. Im Sinne dieser Erfindung zeichnet ein Mikroskop eine Einrichtung zur vergrößernden visuellen Darstellung eines Untersuchungsobjekts. Das Mikroskop kann ein klassisches Lichtmikroskop sein, welches ein vergrößertes Abbild durch Ausnutzung optischer Effekte erzeugt, insbesondere durch Mittel zur Strahlführung und/oder -formung und/oder -lenkung, beispielsweise Linsen. Das Mikroskop kann aber auch ein Digitalmikroskop sein, wobei das von dem Mikroskop zu visualisierende Abbild mittels einer Bilderfassungseinrichtung erzeugt und auf einer entsprechenden Anzeigeeinrichtung, beispielsweise einem Display, zur Anzeige gebracht werden kann.

Das Mikroskop kann insbesondere mindestens ein Okular umfassen. Das Okular bezeichnet einen Teil des Mikroskops, durch den oder in den ein Benutzer schaut, um das vom Mikroskop erzeugte Abbildung visuell zu erfassen. Mit anderen Worten bildet ein Okular eine augenseitige optische Schnittstelle des Mikroskops. Das Okular kann einen Teil eines Tubus bilden. Weiter kann das Mikroskop mindestens ein Objektiv oder ein Objektivsystem umfassen. Dieses Objektiv kann eine reelle optische Abbildung eines Untersuchungsobjektes erzeugen. Das Objektiv kann hierbei optische Elemente zur Strahlführung und/oder -formung und/oder -lenkung umfassen. Das Okular kann optisch mit dem Objektiv verbunden sein oder werden.

Weiter kann das Mikroskop einen Mikroskopkörper umfassen. Der Mikroskopkörper kann einen Strahlengang für die mikroskopische Abbildung aufweisen oder ausbilden. Der Mikroskopkörper kann hierbei weitere optische Elemente zur Strahlführung und/oder - formung und/oder -ablenkung umfassen. Das Objektiv kann in den Mikroskopkörper integriert oder an diesem befestigt sein, insbesondere lösbar. Hierbei kann das Objektiv ortsfest relativ zum Mikroskopkörper angeordnet sein. Weiter kann der Mikroskopkörper mindestens eine Befestigungsschnittstelle zur Befestigung, insbesondere zur lösbaren Befestigung, eines Tubus aufweisen oder ausbilden. Der Mikroskopkörper kann ein Gehäuse umfassen oder ausbilden oder in einem Gehäuse angeordnet sein.

Weiter kann das Mikroskopiesystem ein Stativ zur Halterung des Mikroskops umfassen. Das Mikroskop, insbesondere der Mikroskopkörper, kann somit an dem Stativ mechanisch befestigt sein. Das Stativ ist hierbei derart ausgebildet, dass es eine Bewegung des Mikroskops im Raum ermöglicht, insbesondere mit mindestens einem Freiheitsgrad, vorzugsweise mit sechs Freiheitsgraden, wobei ein Freiheitsgrad ein Translations- oder ein Rotationsfreiheitsgrad sein kann. Die Freiheitsgrade können sich hierbei auf ein Referenzkoordinatensystem beziehen. Eine Vertikalachse (z-Achse) dieses Referenzkoordinatensystems kann parallel zur Gravitationskraft und entgegengesetzt zu dieser orientiert sein. Eine Längsachse (x-Achse) des Referenzkoordinatensystems und eine Querachse (y-Achse) des Referenzkoordinatensystems können hierbei eine Ebene aufspannen, die senkrecht zur Vertikalachse orientiert ist. Weiter können auch die Längs- und die Querachse orthogonal zueinander orientiert sein.

Weiter kann das Stativ mindestens eine Antriebseinrichtung zur Bewegung des Mikroskops umfassen. Eine solche Antriebseinrichtung kann beispielsweise ein Servomotor sein. Selbstverständlich kann das Stativ auch Mittel zur Kraft-/ Momentenübertragung, z.B. Getriebeeinheiten, umfassen. Insbesondere ist es möglich, die mindestens eine Antriebseinrichtung derart anzusteuern, dass das Mikroskop eine gewünschte Bewegung und somit eine gewünschte Lageänderung im Raum ausführt oder eine gewünschte Lage, also eine Position und/oder Orientierung, im Raum einnimmt. Beispielsweise kann die mindestens eine Antriebseinrichtung derart angesteuert werden, dass eine optische Achse des Objektivs eine gewünschte Orientierung einnimmt. Weiter kann die mindestens eine Antriebseinrichtung derart angesteuert werden, dass ein Referenzpunkt des Mikroskops, z.B. ein Fokuspunkt, an einer gewünschten Position im Raum positioniert wird. Eine Soll-Lage kann hierbei von einem Benutzer oder einem anderen übergeordneten System vorgegeben werden. Verfahren zur Steuerung der mindestens einen Antriebseinrichtung in Abhängigkeit einer Soll-Lage und einer kinematischen Struktur des Stativs sind hierbei dem Fachmann bekannt.

Das Mikroskopiesystem umfasst eine Trackingkamera zur Abbildung mindestens eines Markers. Diese Trackingkamera kann Teil einer Lageerfassungseinrichtung des Mikroskopiesystems sein. Weiter kann die Lageerfassungseinrichtung eine Auswerte- oder Recheneinrichtung umfassen, die durch Auswertung der von der Trackingkamera erzeugten Abbilder eine Lagebestimmung/-erfassung durchführen kann. Der Marker bzw. das Markerelement kann hierbei Teil eines Targets sein oder an einem Target befestigt sein. Das Target oder der Marker kann insbesondere an einem (medizinischen) Instrument befestigt sein. Die Trackingkamera umfasst einen Bildsensor, z.B. einen CCD- oder CMOS-Bildsensor. Eine Auflösung des Bildsensors kann beispielsweise 12 Megapixel betragen. Weiter kann die Trackingkamera ein optisches System mit mindestens einem optischen Element umfassen. Die Lageerfassung kann auch zur Lageverfolgung dienen, also der Bestimmung der Lage an mehreren aufeinanderfolgenden Zeitpunkten. Mittels der Trackingkamera kann insbesondere eine sogenannte monoskopische Lageerfassung erfolgen. Hierbei kann die Lage durch Auswertung eines zweidimensionalen Abbilds, insbesondere genau eines zweidimensionalen Abbilds, bestimmt werden. Die Trackingkamera kann Teil einer Lageerfassungseinrichtung sein, die zusätzlich zu der Trackingkamera auch eine Auswerteeinrichtung zur Bestimmung der Lage in einem vorbestimmten Referenzkoordinatensystem umfassen kann. Die Lage bezeichnet eine räumliche Position und/oder eine räumliche Orientierung in dem Referenzkoordinatensystem. Insbesondere kann zur Bestimmung der Lage eine Auswertung von Intensitätswerten von Pixeln des zweidimensionalen Abbilds durchgeführt werden. Solche Verfahren zur bildbasierten Lageerfassung mit genau einer Trackingkamera oder mehreren Trackingkameras sind dem Fachmann bekannt.

Erfindungsgemäß umfasst das Mikroskopiesystem mindestens eine Einrichtung zur Bestimmung eines Arbeitsabstands des Mikroskops. Dieser Arbeitsabstand des Mikroskops kann einen Abstand zwischen einer Schärfeebene und einem Abschlusselement eines Objektivsystems des Mikroskops entlang einer optischen Achse des Mikroskops bezeichnen, die durch das Objektiv bzw. Objektivsystem des Mikroskops festgelegt sein kann. Das Abschlusselement kann beispielsweise eine Linse (Frontlinse) des Objektivs/Objektivsystems oder eine transparente Abschlussscheibe sein. Die Schärfen- oder Detektionsebene kann eine Ebene im Objektraum bezeichnen, wobei ein Objekt in dieser Ebene mit einer gewünschten Schärfe abgebildet wird. Sie kann orthogonal zur optischen Achse des Mikroskops orientiert sein, die die Schärfenebene in der Mitte des Schärfentiefenbereichs schneidet. Der Schärfentiefenbereich ist in bekannter Weise abhängig von einer aktuell eingestellten Brennweite, der aktuell eingestellten Entfernung als auch der aktuell eingestellten Blendenöffnung. So ist es insbesondere möglich, die Schärfeebene und somit auch den Arbeitsabstand in Abhängigkeit mindestens einer der genannten Größen zu bestimmen. Selbstverständlich sind auch andere Verfahren zur Bestimmung des Arbeitsabstands denkbar. Es ist beispielsweise möglich, dass ein Arbeitsabstand des Mikroskops auf ein oder mehrere, aber nicht alle, Werte eines vorbestimmten Wertebereichs eingestellt werden kann, beispielsweise auf den Wert 100 mm, den Wert 200 mm und den Wert 630 mm.
Der Arbeitsabstand des Mikroskops kann über dem Fachmann bekannte Verfahren automatisiert bestimmt werden. So kann der Arbeitsabstand insbesondere dann bestimmt werden, wenn eine Lage eine Schärfenebene des Mikroskops durch einen Nutzer oder durch die Durchführung einer Autofokusfunktion eingestellt wurde, mit anderen Worten also ein scharfgestellter Zustand des Mikroskops eingestellt ist. Das Scharfstellen erfolgt insbesondere durch eine Einstellung von Parametern des Objektivs des Mikroskops, z.B. einer Lage von mindestens eines beweglichen optischen Elements dieses Objektivs.
Die Autofokusfunktion kann beispielsweise durch eine Fokussiereinrichtung des Mikroskopiesystems durchgeführt werden. In diesem Zustand kann dann ein Arbeitsabstand in Abhängigkeit der eingestellten Parameter des Objektivs bestimmt werden, z.B. über eine vorbestimmte Zuordnung, eine vorbestimmte Kennlinie oder eine vorbestimmte Funktion, insbesondere eine Polynomfunktion. Beim Scharfstellen kann z.B. eine Bildweite eines Objektivs des Mikroskops eingestellt werden, wobei dieser Bildweite ein Arbeitsabstand zugeordnet sein bzw. aus einer eingestellten Bildweite ein Arbeitsabstand bestimmt werden kann. So kann z.B. angenommen werden, dass ein Abstand eines Markers, insbesondere wenn er an einem Instrument angeordnet ist, von der Trackingkamera des Mikroskopiesystems genau oder annähernd dem Arbeitsabstand des Mikroskops entspricht, insbesondere weil ein Chirurg z.B. das Instrument mit einem solchen Marker in der Regel auch in dem von dem Mikroskop scharf abgebildeten Bereich benutzt/bewegt.

Es ist auch möglich, dass das Mikroskopiesystem eine Einrichtung zur Bestimmung eines Arbeitsabstands der Trackingkamera umfasst, wobei dieser Arbeitsabstand vorzugsweise, aber nicht notwendigerweise zwingend, in Abhängigkeit des Arbeitsabstands des Mikroskops bestimmt wird, beispielsweise über eine vorbekannte Zuordnung. Durch die Zuordnung kann der Arbeitsabstand der Trackingkamera einem Arbeitsabstand oder einem Arbeitsabstandsbereich des Mikroskops zugeordnet sein. Der Arbeitsabstand der Trackingkamera kann einen Abstand zwischen einer Schärfeebene und einem Abschlusselement, z.B. einer (Front-)Linse eines Objektivsystems der Trackingkamera entlang einer optischen Achse der Trackingkamera bezeichnen, die durch das Objektiv bzw. Objektivsystem der Trackingkamera festgelegt sein kann. Es ist jedoch auch denkbar, den Arbeitsabstand der Trackingkamera unabhängig von dem Arbeitsabstand des Mikroskops zu bestimmen.

Weiter umfasst das Mikroskopiesystem mindestens ein bewegliches optisches Element, dessen Lage zur Einstellung eines Erfassungsbereichs der Trackingkamera veränderbar ist. Das bewegliche optische Element kann Teil des Objektivsystems der Trackingkamera sein. Insbesondere kann durch die Lageveränderung ein Bildwinkel der Trackingkamera verändert werden. Der Erfassungsbereich kann hierbei z.B. kegelförmig ausgebildet sein. Durch die Bewegung des optischen Elements kann auch die Lage eines Brennpunkts des optischen Elements bzw. eines das optische Element umfassenden Objektivsystems verändert werden. Weiter umfasst das Mikroskopiesystem mindestens eine Steuereinrichtung zur Steuerung des beweglichen optischen Elements, insbesondere zur Bewegungssteuerung. Durch diese Steuereinrichtung kann insbesondere eine Bewegung des beweglichen optischen Elements in eine gewünschte Lage gesteuert werden.

Weiter ist die Lage des beweglichen optischen Elements in Abhängigkeit des Arbeitsabstands einstellbar. Beispielsweise können verschiedenen Arbeitsabständen oder verschiedenen Arbeitsabstandsbereichen jeweils verschiedene Lagen des beweglichen optischen Elements zugeordnet sein, wobei für einen Arbeitsabstand die Lage eingestellt wird, die diesem Arbeitsabstand oder dem Bereich, in dem der Arbeitsabstand liegt, zugeordnet ist. Z.B. kann die Zuordnung eines Arbeitsabstands zu einer Lage durch ein Kalibrierverfahren bestimmt werden. Auch ist es vorstellbar, dass ein funktioneller Zusammenhang zwischen der Lage und dem Arbeitsabstand besteht, wobei die Lage dann durch Auswertung des Zusammenhangs ermittelt werden kann. Die verschiedenen einstellbaren Lagen des beweglichen optischen Elements legen verschiedene Erfassungsbereiche, insbesondere Erfassungsbereiche mit voneinander verschiedenen Erfassungswinkeln, fest. Somit legen diese Lagen auch verschiedene Schärfenebenen der Trackingkamera fest.

Alternativ, vorzugsweise jedoch kumulativ zum beweglichen optischen Element, umfasst das Mikroskopiesystem mindestens zwei Trackingbeleuchtungseinrichtungen und mindestens ein insbesondere als Linse ausgebildetes optisches Element zur Strahlführung der von den Trackingbeleuchtungseinrichtungen erzeugten Strahlung. Durch das mindestens eine optische Element kann also ein Beleuchtungsbereich festgelegt sein. Eine solche Beleuchtungseinrichtung kann insbesondere als LED ausgebildet sein. Eine Trackingbeleuchtungseinrichtung kann hierbei Licht im nahen Infrarotbereich, vorzugsweise in einem schmalbandigen Wellenlängenbereich, beispielsweise mit einer Wellenlänge von 850 nm oder mit einer Wellenlänge aus einem Bereich von 800 nm bis 900 nm, erzeugen. Insbesondere kann in einer solchen Ausführungsform der mindestens eine Marker zumindest teilweise oder vollständig aus einem diese Strahlung reflektierenden Material ausgebildet sein.

Umfasst das Mikroskopiesystem eine Trackingbeleuchtungseinrichtung, so kann die Steuereinrichtung alternativ oder kumulativ zur Steuerung einer Betriebsweise, insbesondere eines Aktivierungszustands und/oder einer Intensität der erzeugten Strahlung, und/oder zur Einstellung eines Beleuchtungsbereichs der Trackingbeleuchtungseinrichtung dienen. Ein Aktivierungszustand kann hierbei beispielsweise "nicht aktiv" sein, wobei in diesem Zustand keine Strahlung von der Trackingbeleuchtungseinrichtung erzeugt wird. Ein weiterer Aktivierungszustand kann "aktiv" sein, wobei in diesem Aktivierungszustand Strahlung von der Trackingbeleuchtungseinrichtung erzeugt wird. Weiter kann die Intensität im aktiven Zustand eingestellt werden. Zur Einstellung eines Beleuchtungsbereichs kann ein Beleuchtungswinkel, eine Größe und/oder eine geometrische Form des Beleuchtungsbereichs eingestellt werden, beispielsweise durch Ansteuerung von (optischen) Elementen zur Einstellung der genannten Größen. Es ist z.B. möglich, dass ein optisches Element zur Strahlführung der von einer Trackingbeleuchtungseinrichtung erzeugten Strahlung ein bewegliches und/oder verformbares optisches Element ist, wobei eine Lage und/oder eine Form dieses optischen Elements zur Einstellung verschiedener Beleuchtungsbereiche verändert werden kann. Insbesondere kann dieses optische Element ein entsprechend dem beweglichen optischen Element zum Einstellen des Erfassungsbereichs der Trackingkamera ausgebildetes Element sein, Der Beleuchtungswinkel kann ein Abstrahlwinkel der Beleuchtungseinrichtung sein. Dieser wiederum kann dem Öffnungswinkel eines kegelförmigen Beleuchtungsbereichs entsprechen.

Umfasst das Mikroskopiesystem eine Trackingbeleuchtungseinrichtung, so kann alternativ oder kumulativ zur Einstellung der Lage des beweglichen optischen Elements eine Betriebsweise der Trackingbeleuchtungseinrichtung(en) in Abhängigkeit des Arbeitsabstands einstellbar sein. Es ist möglich, dass verschiedenen Arbeitsabständen oder -bereichen verschiedene Betriebsweisen der Trackingbeleuchtungseinrichtung(en) zugeordnet sind, wobei dann durch die Steuereinrichtung die Betriebsweise der Trackingbeleuchtungseinrichtungen eingestellt wird, die dem aktuell bestimmten Arbeitsabstand der -bereich zugeordnet ist. Verschiedene Betriebsweisen können sich hierbei in einer Anzahl der aktivierten Trackingbeleuchtungseinrichtungen und/oder in der Intensität der von mindestens einer aktivierten Trackingbeleuchtungseinrichtung erzeugten Strahlung unterscheiden. Weiter alternativ oder kumulativ kann auch der Beleuchtungsbereich in Abhängigkeit des Arbeitsabstands einstellbar sein, insbesondere durch Einstellung der Betriebsweise der Trackingbeleuchtungseinrichtungen, aber auch durch Ansteuerung davon verschiedener Elemente zur Beeinflussung des Beleuchtungsbereichs.

Das vorgeschlagene Mikroskopiesystem ermöglicht in vorteilhafter Weise eine genaue, zuverlässige und wenig Bauraum erfordernde Lageerfassung eines Markers durch die Trackingkamera. So kann insbesondere der Erfassungsbereich an verschiedene Abstände zwischen Marker/Target und Trackingkamera angepasst werden, wodurch insbesondere das Risiko einer unerwünschten Entfernung des Markers aus dem Erfassungsbereich der Trackingkamera, also ein Sichtverlust, minimiert wird, was wiederum die Zuverlässigkeit der Lageerfassung erhöht. Insbesondere kann für kurze Arbeitsabstände ein großer Erfassungswinkel der Trackingkamera und für größere Arbeitsabstände ein kleinerer Erfassungswinkel eingestellt werden. So kann z.B. angenommen werden, dass bei einem eingestellten Arbeitsabstand des Mikroskops ein Target oder Marker in einem vorbestimmten Raumbereich entlang der optischen Achse des Mikroskops vor und/oder hinter einer Arbeitsabstandsebene angeordnet ist, die die optische Achse schneidet, insbesondere orthogonal. So kann insbesondere davon ausgegangen werden, dass ein Nutzer das Mikroskop auf einen Operationsbereich scharfstellt und dass Marker/Targets in einem Raumbereich um diesen Operationsbereich herum bewegt werden, z.B. weil ein Instrument mit einem Marker in diesem Raumbereich benutzt wird oder ein Patient, an dem ein Marker befestigt ist, in diesem Raumbereich angeordnet ist. Durch die Bewegung des optischen Elements kann der Erfassungsbereich der Trackingkamera also derart eingestellt werden, dass ein in diesem Raumbereich angeordnetes Target/Marker zuverlässig und mit einer für die Lageerfassung gewünschten Qualität abgebildet werden kann.

Durch die arbeitsabstandsabhängige Einstellung der Betriebsweise der Trackingbeleuchtungseinrichtungen kann ebenfalls die Zuverlässigkeit und Genauigkeit der Lageerfassung verbessert werden, insbesondere können die eingangs erläuterten Probleme der Über- oder Unterbelichtung für verschiedene Arbeitsabstände reduziert werden. Beispielsweise kann für geringere Arbeitsabstände eine Gesamtintensität der erzeugten Strahlung geringer eingestellt werden als für im Vergleich größere Arbeitsabstände. Durch die Integration der Trackingkamera als auch der Beleuchtungseinrichtungen in das Mikroskopiesystem ergibt sich die erläuterte, wenig Bauraum erfordernde Ausbildung.

In einer Ausführungsform in der das Mikroskopiesystem ein bewegliches optisches Element zur Einstellung des Erfassungsbereichs umfasst, kann das Mikroskopiesystem genau eine Trackingbeleuchtungseinrichtung umfassen. In einer Ausführungsform in der das Mikroskopiesystem mindestens zwei Trackingbeleuchtungseinrichtungen umfasst, ist es möglich, dass ein Erfassungsbereich der Trackingkamera nicht veränderbar ist, beispielsweise wenn ein Objektivsystem der Trackingkamera als Festbrennweitenobjektivsystem ausgebildet ist.

In einer weiteren Ausführungsform wird für einen ersten Arbeitsabstand ein erster Erfassungswinkel der Trackingkamera und für mindestens einen weiteren Arbeitsabstand ein weiterer Erfassungswinkel der Trackingkamera eingestellt, wobei der erste Arbeitsabstand kleiner als der weitere Arbeitsabstand ist und der erste Erfassungswinkel größer als der weitere Erfassungswinkel ist. Der Erfassungswinkel kann hierbei einen Bildwinkel der Trackingkamera bezeichnen, insbesondere einen horizontalen Bildwinkel, vertikalen Bildwinkel oder diagonalen Bildwinkel. Somit kann die Dimension einer Schnittfläche des Erfassungsbereichs mit einer Ebene, die die optische Achse der Trackingkamera im ersten Arbeitsabstand schneidet, beispielsweise orthogonal schneidet, für den ersten Erfassungswinkel größer sein als für den weiteren Erfassungswinkel. Hierdurch wird jedoch wiederum sichergestellt, dass auch Marker, die mit dem weiteren Arbeitsabstand von dem Abschlusselement der Trackingkamera beabstandet sind, mit einer ausreichend hohen Auflösung erfasst werden können.

In einer weiteren Ausführungsform ist eine Anzahl der aktivierten Trackingbeleuchtungseinrichtungen und/oder eine Intensität der aktivierten Trackingbeleuchtungseinrichtungen in Abhängigkeit des Arbeitsabstands einstellbar. Hierdurch kann insbesondere eine Gesamtintensität der von den Trackingbeleuchtungseinrichtungen erzeugten Strahlung einstellbar sein. Die Einstellung kann hierbei - wie vorhergehend erläutert - zuordnungsbasiert erfolgen, wobei den verschiedenen Arbeitsabständen verschiedene Anzahlen von aktivierten Trackingbeleuchtungseinrichtungen und/oder verschiedene Intensitäten der aktivierten Trackingbeleuchtungseinrichtungen zugeordnet sind und eingestellt werden, wenn ein entsprechender Arbeitsabstand aktuell bestimmt wurde. Hierdurch ergibt sich in vorteilhafter Weise eine Anpassung der Beleuchtung an den Arbeitsabstand, wodurch insbesondere Überbelichtungen bei niedrigen Arbeitsabständen und Unterbelichtungen bei im Vergleich hohen Arbeitsabständen vermieden werden können.

In einer weiteren Ausführungsform wird für einen ersten Arbeitsabstand eine erste Gesamtintensität der von den Trackingbeleuchtungseinrichtungen erzeugten Strahlung eingestellt. Weiter wird für einen weiteren Arbeitsabstand eine weitere Gesamtintensität der von den Trackingbeleuchtungseinrichtungen erzeugten Strahlung eingestellt, wobei der erste Arbeitsabstand kleiner als der weitere Arbeitsabstand ist und die erste Gesamtintensität geringer als die weitere Gesamtintensität ist. Wie erläutert ist es möglich, die Gesamtintensität durch Einstellung der Anzahl aktivierter Beleuchtungseinrichtungen und/oder durch Einstellung der Intensität der aktivierten Beleuchtungseinrichtungen einzustellen. Es ist jedoch möglich, dass ein Aktivierungszustand der Trackingbeleuchtungseinrichtung, nicht aber die Intensität der im aktivierten Zustand erzeugten Strahlung einstellbar ist. Hierdurch ergibt sich in vorteilhafter Weise, dass für geringere Soll-Arbeitsabstände geringere Intensitäten der erzeugten Strahlung für im Vergleich größere Arbeitsabstände eingestellt werden können, wodurch das Risiko einer Überbelichtung bei niedrigen Arbeitsabständen und von Unterbelichtungen bei im Vergleich größeren Arbeitsabständen minimiert werden, was für eine zuverlässige und somit auch genaue Lageerfassung sorgt.

In einer weiteren Ausführungsform umfasst das Mikroskopiesystem mehrere Gruppen von Trackingbeleuchtungseinrichtungen, wobei eine Gruppe mindestens eine, vorzugsweise aber mehr als eine, Trackingbeleuchtungseinrichtung umfasst. Eine Gruppe kann beispielsweise ein sogenanntes Array von Trackingbeleuchtungseinrichtungen umfassen. Weiter umfasst das Mikroskopiesystem mindestens zwei optische Elemente zur Strahlführung, die verschiedenen Gruppen zugeordnet sind. Dies kann bedeuten, dass durch die von (der) Trackingbeleuchtungseinrichtung(en) dieser Gruppe erzeugte Strahlung durch das der Gruppe zugeordnete optische Element geführt wird werden. Beispielsweise kann ein erstes optisches Element einer ersten Gruppe und ein weiteres optisches Elemente einer weiteren Gruppe von Trackingbeleuchtungseinrichtungen zugeordnet sein. Hierbei kann mindestens eine Trackingbeleuchtungseinrichtung einer Gruppe nicht Bestandteil einer weiteren Gruppe sein. Vorzugsweise ist keine der Trackingbeleuchtungseinrichtungen einer Gruppe Bestandteil einer weiteren Gruppe von Trackingbeleuchtungseinrichtungen. Es ist möglich, dass ein optisches Element mehreren Gruppen von Trackingbeleuchtungseinrichtungen zugeordnet ist. In diesem Fall unterscheiden sich die verschiedenen optischen Elemente zur Strahlführung in mindestens einer zugeordneten Gruppe von Trackingbeleuchtungseinrichtungen.

Es ist möglich, dass die verschiedenen Beleuchtungseinrichtungen einer Gruppe in einer Reihe entlang einer gemeinsamen Geraden oder matrixartig angeordnet sind. Hierbei kann jede der Beleuchtungseinrichtungen einer Gruppe individuell angesteuert werden, beispielsweise um einen Aktivierungszustand und/oder eine Intensität der erzeugten Strahlung einzustellen. Weiter ist es möglich, dass die Beleuchtungseinrichtungen auf einem wärmeleitfähigen Träger angeordnet sind, der thermisch mit einer Kühleinrichtung zur verbesserten Wärmeableitung verbunden ist.

Hierdurch ergibt sich in vorteilhafter Weise, dass in einfacher Weise ein Beleuchtungsbereich arbeitsabstandsabhängig eingestellt werden kann. So können durch die (verschiedenen) optischen Eigenschaften der optischen Elemente verschiedene Beleuchtungsbereiche festgelegt sein, wobei der entsprechend festgelegte Beleuchtungsbereich bei Aktivierung der Trackingbeleuchtungseinrichtungen der dem optischen Element zugeordneten Gruppe ausgeleuchtet wird. Voneinander verschiedene Beleuchtungsbereiche können sich in der Lage, Form, Größe oder von in einer weiteren Eigenschaft unterscheiden. Durch die Anpassung des Beleuchtungsbereichs an den Arbeitsabstand wird in vorteilhafter Weise das Risiko der Unter- oder Überbelichtung weiter verringert. Ebenfalls kann in vorteilhafter Weise eine unnötige Beleuchtung von Bereichen, die für die Lageerfassung nicht interessant sind, vermieden werden, was einerseits in vorteilhafter Weise einen Energiebedarf zur Lageerfassung reduziert und andererseits in vorteilhafter Weise unerwünschtes Streulicht reduziert, was sich auf die Funktionsweise weiterer Systeme auswirken kann.

In einer weiteren Ausführungsform weisen mindestens zwei der Vielzahl von optischen Elementen zur Strahlführung voneinander verschiedene optische Eigenschaften auf. Die optischen Eigenschaften können insbesondere derart gewählt sein, dass durch die optischen Elemente bei Aktivierung von einer oder mehreren Gruppen voneinander verschiedene Beleuchtungsbereiche, insbesondere in einer Schnittebene senkrecht zur optischen Achse mindestens eines Elements, eingestellt werden. Hierdurch ergibt sich in vorteilhafter Weise eine einfach realisierbare Anpassung des Beleuchtungsbereichs an den Arbeitsabstand, insbesondere über verbaute, statische optische Elemente, was eine Anpassung ohne eine komplizierte Veränderung von optischen Eigenschaften ermöglicht. Selbstverständlich ist es aber auch möglich, dass die verschiedenen optischen Elemente gleiche optische Eigenschaften aufweisen.

In einer weiteren Ausführungsform ist der durch die optischen Eigenschaften eines ersten optischen Elements festgelegte Beleuchtungswinkel des Beleuchtungsbereichs größer als der durch die optischen Eigenschaften eines weiteren optischen Elements festgelegte Beleuchtungswinkel des Beleuchtungsbereichs. Ist das erste optische Element einer ersten Gruppe von Trackingbeleuchtungseinrichtungen zugeordnet, so können diese aktiviert werden, wenn ein erster Arbeitsabstand bestimmt wird, wobei der erste Arbeitsabstand kleiner als ein weiterer Arbeitsabstand ist, wobei bei Bestimmung des Weiteren Arbeitsabstands die Trackingbeleuchtungseinrichtungen einer weiteren Gruppe aktiviert werden, der das weitere optische Element zugeordnet ist. Mit anderen Worten kann somit für im Vergleich kürzere Arbeitsabstände ein größerer Beleuchtungswinkel des Beleuchtungsbereichs eingestellt werden, wodurch sich einerseits eine Anpassung der Beleuchtungswinkel an die Erfassungswinkel ergibt, andererseits aber auch die unerwünschte Lichtstreuung reduziert werden kann. Insbesondere können die Beleuchtungswinkel der arbeitsabstandsabhängigen Beleuchtungsbereiche gleich den Erfassungswinkeln in den arbeitsabstandsspezifischen Erfassungsbereichen entsprechen oder maximal um ein vorbestimmtes Maß größer als diese sein.

In einer weiteren Ausführungsform schneiden sich die optischen Achsen der optischen Elemente zur Strahlführung in einem gemeinsamen Punkt. Hierdurch ergibt sich in vorteilhafter Weise, dass ein Beleuchtungsbereich durch Aktivierung mehrerer Gruppen geschaffen wird, deren Strahlungen sich effektiv zu einer resultierenden Strahlung überlagern. Es ist aber auch möglich, dass optische Achsen der Beleuchtungseinrichtungen voneinander verschieden orientiert oder angeordnet sind und sich nicht in einem gemeinsamen Punkt schneiden.

In einer weiteren Ausführungsform werden die Trackingbeleuchtungseinrichtungen gepulst betrieben, insbesondere mit einem vorbestimmten Tastgrad. In diesem Fall kann eine Trackingbeleuchtungseinrichtung für eine vorbestimmte Zeitdauer aktiviert und für eine vorbestimmte weitere Zeitdauer deaktiviert werden, wobei die Summe der Zeitdauern gleich einer Periodendauer ist. Weiter wird die Zeitdauer eines aktivierten Zustands (und somit auch der erläuterte Tastgrad) an einen Belichtungszeitraum der Trackingkamera angepasst. Die Belichtungszeitdauer kann hierbei von einem übergeordneten System bestimmt werden, beispielsweise von einer Kameraregeleinrichtung. Diese Kameraregeleinrichtung kann ebenfalls Bestandteil des Mikroskopiesystems sein und z.B. mit der Steuereinrichtung über eine Signalverbindung verbunden sein. Hierdurch ergibt sich in vorteilhafter Weise, dass die vorhergehend erläuterte Streulichterzeugung weiter reduziert wird, insbesondere da in Zeitabschnitten, in denen keine Bilderzeugung zur Lageerfassung erfolgt, auch keine Beleuchtung vorgenommen wird. Dies reduziert ebenfalls den Energiebedarf des Mikroskopiesystems.

In einer weiteren Ausführungsform umfasst das Mikroskopiesystem eine Recheneinrichtung zur Bestimmung des Arbeitsabstands. Diese Recheneinrichtung kann als Mikrocontroller oder integrierte Schaltung ausgebildet sein oder eine(n) solche(n) umfassen. Die Recheneinrichtung kann insbesondere durch eine Steuereinrichtung des Mikroskopiesystems ausgebildet werden oder Teil davon sein.

In einer weiteren Ausführungsform umfasst das Mikroskopiesystem einen Strahlengang zur Erzeugung des mikroskopischen Abbilds oder bildet diesen aus. Dieser Strahlengang kann insbesondere der Strahlengang eines Objektivs des Mikroskops sein und/oder vom Mikroskopkörper ausgebildet werden. Das mikroskopische Abbild bezeichnet hierbei das vergrößerte Abbild eines Untersuchungsbereichs. Weiter umfasst das Mikroskopiesystem mindestens einen weiteren Strahlengang zur Erzeugung des Trackingabbilds oder bildet diesen aus, wobei die Strahlengänge voneinander verschieden sind. Der Strahlengang kann insbesondere der Strahlengang eines Objektivsystems der Trackingkamera sein und/oder vom Mikroskopkörper ausgebildet werden. Beispielsweise können die verschiedenen Strahlengänge durch Wandelemente und/oder Stegelemente voneinander getrennt sein. Diese Elemente können vom Mikroskopkörper ausgebildet werden.

Auch kann das Mikroskopiesystem optische Elemente zur Erzeugung der Abbilder umfassen, welche im oder am jeweiligen Strahlengang angeordnet sind. In verschiedenen Strahlengängen angeordnete optische Elemente können voneinander verschieden sein. Es ist möglich, dass ein Bauteil mit dem beweglichen optischen Element und/oder der/den Trackingbeleuchtungseinrichtung(en) und den optischen Elementen zur Strahlführung lösbar an dem Mikroskopkörper befestigt ist. Mit anderen Worten kann somit eine Nachrüstung einer Lageerfassungsfunktionalität erfolgen. Das Bauteil kann auch die Steuereinrichtung umfassen. In diesem Fall sind dann entsprechende Signalleitungen und Verbindungen zur Energieversorgung zwischen dem Bauteil und dem Mikroskopiesystem herzustellen. Allerdings ist es auch möglich, dass die genannten Komponenten des Bauteils oder zumindest ein Teil davon in den Mikroskopkörper integriert sind. Hierdurch ergibt sich eine platzsparende Bereitstellung einer zuverlässigen und genauen Lageerfassung, wobei jedoch ebenfalls eine qualitativ hochwertige Vergrößerung gewährleistet wird, da durch die verschiedenen Strahlengänge keine Beeinflussung der mikroskopischen Abbildung oder der Trackingabbildung erfolgt.

In einer weiteren Ausführungsform umfasst das Mikroskopiesystem mindestens eine Sichtfeldbeleuchtungseinrichtung. Die Sichtfeldbeleuchtungseinrichtung kann hierbei ebenfalls in oder an dem Mikroskopkörper angeordnet sein. Weiter ist die Sichtfeldbeleuchtungseinrichtung von der/den Trackingbeleuchtungseinrichtung(en) verschieden. Insbesondere kann ein Beleuchtungsbereich der Sichtfeldbeleuchtungseinrichtung größer als der größte, einstellbare Beleuchtungsbereich der Trackingbeleuchtungseinrichtung(en) sein. Ferner kann die Sichtfeldbeleuchtungseinrichtung Strahlung mit Wellenlängen aus einem Wellenlängenbereich erzeugen, die von den Wellenlängen aus dem Wellenlängenbereich der Strahlung der Trackingbeleuchtungseinrichtungen verschieden sind. Insbesondere können sich die Wellenlängenbereiche nicht oder nur in einem Teilbereich überschneiden. Hierdurch ergibt sich in vorteilhafter Weise, dass die Beleuchtung zur Lageerfassung unabhängig von der Beleuchtung zur mikroskopischen Abbildung eingestellt werden kann, was eine Bedienqualität für einen Nutzer des Mikroskopiesystems verbessert.

In einer weiteren Ausführungsform sind genau zwei Lagen des beweglichen optischen Elements wiederholgenau, also mit einer vorbestimmten Wiederholgenauigkeit, einstellbar. Die Wiederholgenauigkeit repräsentiert die Größe einer maximalen Lageabweichung, die sich beim mehrfachen Bewegen des optischen Elements in eine bestimmte Lage einstellen. Diese Wiederholgenauigkeit kann beispielsweise als Standardabweichung der Lagenabweichungen bei einer Vielzahl von, beispielsweise bei mehr als 100, wiederholten Positionierungen in der Lage bestimmt werden. Vorzugsweise ist die Wiederholgenauigkeit kleiner als oder gleich 1 µm bzw. 1°. Mit anderen Worten kann ein derart ausgebildetes Mikroskopiesystem also wiederholgenau zwei Erfassungsbereiche einstellen. Hierdurch ergibt sich in vorteilhafter Weise eine mechanisch einfache Ausbildung des Mikroskopiesystems, wobei jedoch gleichzeitig eine zuverlässige und genaue Lageerfassung ermöglicht wird.

In einer weiteren Ausführungsform ist das bewegliche optische Element beweglich, vorzugsweise linearbeweglich, zwischen zwei Endanschlagelementen gelagert, wobei ein erstes Endanschlagelement ein erstes Lagerelement zur statischen Lagerung und ein weiteres Endanschlagelement ein weiteres Lagerelement zur statischen Lagerung aufweist oder ausbildet, wobei die Lagerelemente die Anschlaglagen des optischen Elements wiederholbar festlegen. Weiter kann Wiederholgenauigkeit einer Bewegungslage des optischen Elements geringer als die Wiederholgenauigkeit in einer Anschlaglage. Die Bewegungslage kann insbesondere eine Lage zwischen den beiden Anschlaglagen sein. Dass die Genauigkeit geringer ist, kann bedeuten, dass der Wert der Wiederholgenauigkeit größer ist als der Wert der Wiederholgenauigkeit in einer Anschlaglage, beispielsweise um das Zehnfache. Mit anderen Worten ist eine Bewegungslage des optischen Elements durch das Bewegungslageelement nicht in der gleichen Weise wiederholgenau festgelegt wie eine Anschlaglage durch das erste und das weitere Lagerelement. Hierdurch ergibt sich in vorteilhafter Weise eine einfache und kostengünstige Ausbildung des optischen Systems, insbesondere da keine hochpräzise Fertigung des Bewegungslagerelements und gegebenenfalls der durch dieses Element bereitgestellten Führungselemente erfolgen muss.

Weiter vorgeschlagen wird ein Verfahren zum Betreiben eines Mikroskopiesystems. Das Mikroskopiesystem kann hierbei gemäß einer der in dieser Offenbarung beschriebenen Ausführungsformen ausgebildet sein. Das Verfahren umfasst:
- die Bestimmung eines Arbeitsabstands,
- die Einstellung einer Lage des beweglichen optischen Elements in Abhängigkeit des Arbeitsabstands und/oder
- die Einstellung einer Betriebsweise der Trackingbeleuchtungseinrichtungen und/oder die Einstellung eines Beleuchtungsbereichs der Trackingbeleuchtungseinrichtungen in Abhängigkeit des Arbeitsabstands.

Weiter kann mit der derart eingestellten Lage des beweglichen optischen Elements und/oder der derart eingestellten Betriebsweise und/oder des Beleuchtungsbereichs der Trackingbeleuchtungseinrichtungen eine Lageerfassung durchgeführt werden, insbesondere indem ein Abbild des mindestens einen Markers erzeugt wird, wobei dieses Abbild dann zur Lagebestimmung ausgewertet wird. Das vorgeschlagene Mikroskopiesystem und Verfahren ermöglicht in vorteilhafter Weise die Integration von wesentlichen Elementen für die Lageerfassung in das Mikroskopiesystem, insbesondere ein Operationsmikroskop. Weiter wird kein am Mikroskopiesystem angeordneter Marker zur Erfassung durch ein mikroskopieexternes Lageerfassungssystem benötigt. Durch die Einstellung des Erfassungsbereichs ergibt sich ebenfalls in vorteilhafter Weise, dass die Möglichkeit geschaffen wird, nur kleine Auswertebereiche auf dem Bildsensor auswerten zu müssen, was einerseits die erforderliche Rechenleistung reduziert, andererseits auch eine Genauigkeit der Detektion von Markern steigert.

Die Erfindung wird anhand von Ausführungsbeispielen näher erläutert. Die Figuren zeigen:
- Fig. 1: eine schematische Ansicht eines erfindungsgemäßen Mikroskopiesystems in einer Ausführungsform,
- Fig. 2: eine perspektivische, schematische Ansicht eines Mikroskops,
- Fig. 3: eine schematische Unteransicht eines Mikroskops,
- Fig. 4: ein schematisches Blockschaltbild eines erfindungsgemäßen Mikroskopiesystems in einer weiteren Ausführungsform,
- Fig. 5: ein schematisches Blockschaltbild eines erfindungsgemäßen Mikroskopiesystems in einer weiteren Ausführungsform,
- Fig. 6: ein schematisches Blockschaltbild eines erfindungsgemäßen Mikroskopiesystems in einer weiteren Ausführungsform,
- Fig. 7a: eine schematische Ansicht eines eingestellten ersten Erfassungsbereichs,
- Fig. 7b: eine schematische Ansicht eines eingestellten weiteren Erfassungsbereichs,
- Fig. 8a: eine schematische Ansicht eines eingestellten ersten Beleuchtungsbereichs,
- Fig. 8b: eine schematische Ansicht eines weiteren, eingestellten Beleuchtungsbereichs,
- Fig. 9a: ein schematisches Flussdiagramm eines erfindungsgemäßen Verfahrens in einer ersten Ausführungsform,
- Fig. 9b: ein schematisches Flussdiagramm eines erfindungsgemäßen Verfahrens in einer weiteren Ausführungsform,
- Fig. 9c: ein schematisches Flussdiagramm eines erfindungsgemäßen Verfahrens in einer weiteren Ausführungsform.

Nachfolgend bezeichnen gleiche Bezugszeichen Elemente mit gleichen oder ähnlichen technischen Merkmalen.

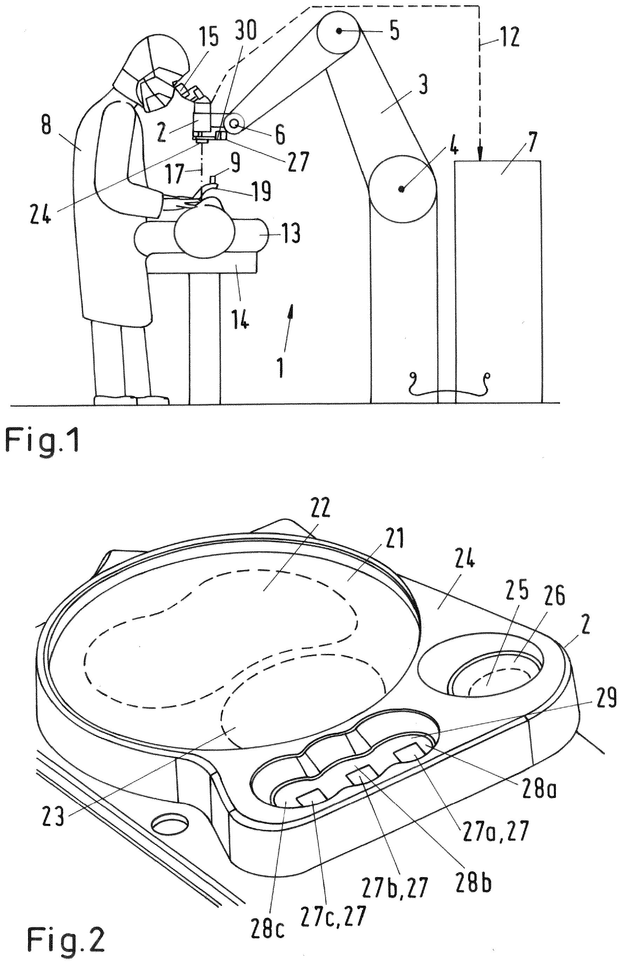

In Fig. 1 ist ein erfindungsgemäßes Mikroskopiesystem 1 bei einer Anwendung in einem Operationsumfeld dargestellt. Das Mikroskopiesystem 1 umfasst ein Operationsmikroskop 2, welches an einem Stativ 3 zur Halterung des Mikroskops 2 angeordnet ist, insbesondere an einem freien Ende des Stativs 3. Das Stativ 3 ermöglicht eine Bewegung des Mikroskops zur Veränderung der Lage, also der Position und/oder Orientierung des Mikroskops 2. Das dargestellte Stativ 3 stellt eine exemplarische kinematische Struktur zur Halterung und Bewegung des Mikroskops 2 dar. Dem Fachmann ist selbstverständlich bekannt, dass auch andere kinematische Strukturen verwendet werden können.

Nicht dargestellte Antriebseinrichtungen des Stativs 3 können eine Drehbewegung von beweglichen Teilen des Stativs 3 um Drehachsen 4, 5, 6 ermöglichen. Weiter dargestellt ist eine Steuereinrichtung 7, die zur Steuerung der Antriebseinrichtungen dient. Mittels der Steuereinrichtung 7 können die Antriebseinrichtungen insbesondere derart angesteuert werden, dass das Mikroskop 2 eine gewünschte Bewegung ausführt, insbesondere im Referenzkoordinatensystem. Weiter kann die Steuereinrichtung 7 auch zur Einstellung von Betriebs- und/oder Bewegungsparametern des Mikroskops 2 dienen, beispielsweise von einem Zoom des Mikroskops 2. Hierzu kann die Steuereinrichtung 7 signal- und/oder datentechnisch mit dem Mikroskop 2 und/oder mit den Antriebseinrichtungen verbunden sein. Weiter dargestellt ist ein Patient 13, der auf einem Operationstisch 14 liegt. Weiter dargestellt ist, dass das Mikroskop 2 ein Okular 15 umfasst, in welches der Benutzer 8 hineinschaut, um durch das Mikroskop 2 einen Teilbereich des Patienten 13 zu betrachten, insbesondere in vergrößernder Art und Weise. Dargestellt ist auch eine optische Achse 17 des Mikroskops 2.

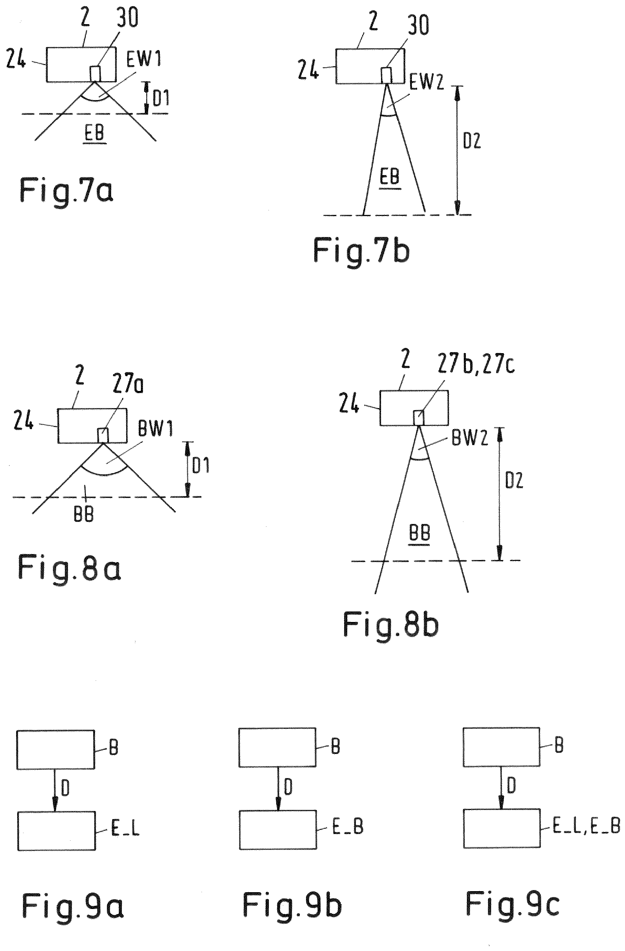

Das Mikroskopiesystem 1 umfasst weiter eine Lageerfassungseinrichtung zur Erfassung einer Lage eines Instruments 19, welches von einem Benutzer 8 gehalten und bewegt werden kann. Der Benutzer 8 kann beispielsweise ein Chirurg sein. Die Lageerfassungseinrichtung umfasst mindestens ein Target 9 mit mindestens einem Markerelement und mindestens eine Trackingkamera 30 zur Erfassung des Targets 9. Mittels der Lageerfassungseinrichtung kann eine Lage des Targets 9 bestimmt werden. In Fig. 1 ist dargestellt, dass das Target 9 an dem Instrument 19 befestigt ist, wobei dann aufgrund der ortsfesten Anordnung des Targets 9 an dem Instrument 19 auch die Lage des Instruments 19 bestimmt werden kann. Die Trackingkamera 30 ist in einem Mikroskopkörper 24 des Mikroskops 2 angeordnet, insbesondere in einem Gehäuse des Mikroskopkörpers 24. Ein Erfassungsbereich EB (siehe Fig. 7a) der Trackingkamera 30 überlappt hierbei zumindest teilweise mit einem Erfassungsbereich des Mikroskops 2 zur vergrößerten Darstellung des Patienten oder Körperbereichen des Patienten 13.

Weiter dargestellt ist eine signal- und/oder datentechnische Verbindung 12 zwischen der Trackingkamera 30 und der Steuereinrichtung 7. Mittels der Steuereinrichtung 7 oder mittels einer nicht dargestellten Auswerteeinrichtung, die beispielsweise Teil der Lageerfassungseinrichtung sein kann, kann eine Relativlage zwischen Target 9 und Trackingkamera 30 in einem dreidimensionalen Koordinatensystem der Lageerfassungseinrichtung bestimmt werden. So kann z.B. die Lage des Targets 9 in einem zweidimensionalen Bildkoordinatensystem der Trackingkamera 30 bestimmt werden und in Abhängigkeit dieser Lage dann eine Lage in dem Koordinatensystem der Lageerfassungseinrichtung. Hierbei kann sowohl eine Position als auch eine Orientierung in dem dreidimensionalen Koordinatensystem der Lageerfassungseinrichtung bestimmt werden. Diese Lage kann dann über eine bekannte, beispielsweise durch eine Registrierung bestimmte, Transformation in das Referenzkoordinatensystem umgerechnet werden. Die Bestimmung der Lage des Targets 9 kann durch Auswertung genau eines zweidimensionalen Abbilds der Trackingkamera 30 erfolgen.

Fig. 2 zeigt eine schematische perspektivische Darstellung eines Abschnitts des Mikroskops 2. Dargestellt ist ein Abschlussglas 21 des Mikroskops 2, welches zwischen einem Strahlengang 22 zur Erzeugung des mikroskopischen Abbilds und einem Außenbereich, beispielsweise dem Raum mit dem Patienten 13, angeordnet ist. Das Abschlussglas 21 ist hierbei transparent für Strahlung zumindest im sichtbaren Wellenlängenbereich, schützt jedoch den Strahlengang 22 zur Erzeugung des mikroskopischen Abbilds vor Verschmutzung. Weiter dargestellt ist eine Sichtfeldbeleuchtungseinrichtung 23, die, wie auch der Strahlengang 22, in einen Mikroskopkörper 24 des Mikroskops 2 integriert ist. Hierbei deckt das Abschlussglas 21 sowohl den Strahlengang 22 als auch die Sichtfeldbeleuchtungseinrichtung 23 ab.

Weiter dargestellt ist ein Strahlengang 25 zur Erzeugung des Trackingabbilds. Dieser Strahlengang 25 wird ebenfalls vom Mikroskopkörper 24 ausgebildet, ist aber vom Strahlengang 22 zur Erzeugung des mikroskopischen Abbilds verschieden, insbesondere durch Wandelemente getrennt. Weiter dargestellt ist ein Abschlussglas 26, das zwischen dem Strahlengang 25 und der äußeren Umgebung angeordnet ist. Das Abschlussglas 26 ist transparent für Licht zumindest im nahen Infrarotbereich und von dem Abschlussglas 21 verschieden.

Ferner dargestellt sind Trackingbeleuchtungseinrichtungen 27a, 27b, 27c, die ebenfalls in den Mikroskopkörper 24 des Mikroskops 2 integriert sind. Die Trackingbeleuchtungseinrichtungen 27a, 27b, 27c sind hierbei von der Sichtfeldbeleuchtungseinrichtung 23 verschieden. Die Trackingbeleuchtungseinrichtungen 27a, 27b, 27c erzeugen hierbei Licht im nahen Infrarotbereich. Zwischen den Trackingbeleuchtungseinrichtungen 27a, 27b, 27c und der äußeren Umgebung sind Linsenelemente 28a, 28b, 28c angeordnet. Die Linsenelemente 28a, 28b, 28c weisen voneinander verschiedene optische Eigenschaften, insbesondere voneinander verschiedene Brennweiten, auf. Hierbei ist ein erstes Linsenelement 28a der ersten Trackingbeleuchtungseinrichtung 27a, ein zweites Linsenelement 28b einer zweiten Trackingbeleuchtungseinrichtung 27b und ein drittes Linsenelement 28c einer dritten Trackingbeleuchtungseinrichtung 27c zugeordnet. Dies kann bedeuten, dass die von der Trackingbeleuchtungseinrichtung 27a, 27b, 27c erzeugte Strahlung durch das dieser Trackingbeleuchtungseinrichtung 27a, 27b, 27c zugeordnete Linsenelement 28a, 28b, 28c gestrahlt wird. In Fig. 2 ist dargestellt, dass die Linsenelemente 28a, 28b, 28c von einem Linsenverbundelement 29 ausgebildet werden, wobei dieses Linsenverbundelement 29 verschiedene Abschnitte umfasst, die die Linsenelemente 28a, 28b, 28c ausbilden.

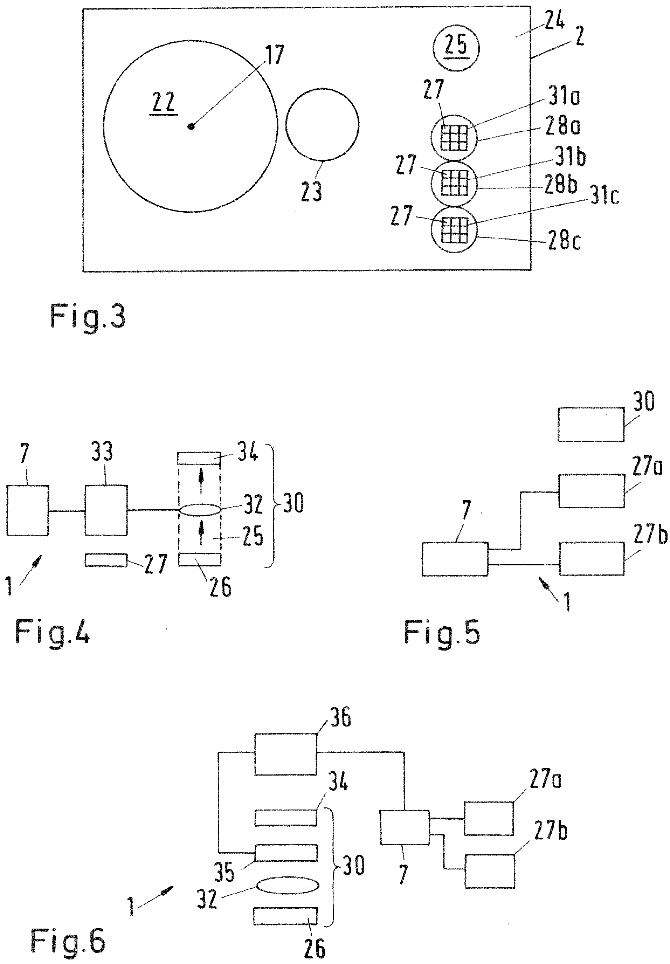

Fig. 3 zeigt eine schematische Unteransicht eines Mikroskops 2, insbesondere eines Mikroskopkörpers 24. Dargestellt ist der erläuterte Strahlengang 22 zur Erzeugung des mikroskopischen Abbilds sowie der ebenfalls im Zusammenhang mit Fig. 2 erläuterte Strahlengang 25 zur Erzeugung des Trackingabbilds durch eine Trackingkamera 30 (siehe Fig. 4). Ebenfalls dargestellt ist die Sichtfeldbeleuchtungseinrichtung 23. Weiter dargestellt sind drei voneinander verschiedene Linsenelemente 28a, 28b, 28c, die im Unterschied zu der in Fig. 2 dargestellten Ausführungsform nicht von einem gemeinsamen Linsenverbundelement ausgebildet werden. Dargestellt ist, dass das Mikroskopiesystem 1 (siehe Fig. 1) drei Gruppen 31a, 31b, 31c von Trackingbeleuchtungseinrichtungen 27 umfasst, wobei der Übersichtlichkeit halber nur eine Trackingbeleuchtungseinrichtung 27 jeder Gruppe 31a, 31b, 31c mit einem Bezugszeichen versehen ist. Die Trackingbeleuchtungseinrichtungen 27 können hierbei als LED ausgebildet sein oder eine solche umfassen. Dargestellt ist, dass die Gruppen 31a, 31b, 31c sogenannte LED-Arrays umfassen, wobei jede der Trackingbeleuchtungseinrichtungen 27 jeder Gruppe 31a, 31b, 31c individuell angesteuert werden kann, beispielsweise um diese individuell zu aktivieren oder die Intensität der von der Trackingbeleuchtungseinrichtung 27 erzeugten Strahlung einzustellen. Die verschiedenen Linsenelemente 28a, 28b, 28c sind hierbei den verschiedenen Gruppen 31a, 31b, 31c zugeordnet. So ist das erste Linsenelement 28a der ersten Gruppe 31a, das zweite Linsenelement 28b der zweiten Gruppe 31b und das dritte Linsenelement 28c der dritten Gruppe 31c zugeordnet, wobei die von den Trackingbeleuchtungseinrichtungen 27 einer Gruppe 31a, 31b, 31c erzeugte Strahlung durch das der jeweiligen Gruppe zugeordnete Linsenelement 28a, 28b, 28c gestrahlt wird und von diesem geführt und/oder geformt wird.

Fig. 4 zeigt ein schematisches Blockschaltbild eines erfindungsgemäßen Mikroskopiesystems 1 in einer weiteren Ausführungsform. Das Mikroskopiesystem 1 umfasst eine Steuereinrichtung 7, die zur Steuerung eines als Linse ausgebildeten beweglichen optischen Elements 32 dient. Hierzu kann die Steuereinrichtung 7 über eine Signalverbindung mit einer Antriebseinrichtung 33 zur Erzeugung einer die Bewegung verursachenden Antriebskraft verbunden sein. Hierbei ist dargestellt, dass das optische Element 32 mit einer Translationsbewegung in einem Strahlengang 25 zur Erzeugung des Trackingabbilds bewegt werden kann, insbesondere parallel zu einer Mittelachse des Strahlengangs. Hierbei ist vorstellbar, dass das optische Element 32 zwischen zwei Endanschlägen bewegt werden kann, insbesondere mit einer Linearbewegung. Weiter dargestellt ist, dass das Mikroskopiesystem 1 eine Trackingkamera 30 umfasst, die das optische Element 32, das Abschlussglas 26 als auch einen Bildsensor 34 zur Erzeugung eines, insbesondere zweidimensionalen, Abbilds umfasst. Durch die Bewegung des beweglichen optischen Elements 32 kann ein Erfassungsbereich EB (siehe z.B. Fig. 7b) der Trackingkamera 30 verändert werden, insbesondere ein Erfassungswinkel EW1, EW2 des Erfassungsbereichs EB. Es ist weiter möglich, dass das in Fig. 4 dargestellte Mikroskopiesystem 1 genau eine oder mehrere Trackingbeleuchtungseinrichtung(en) 27 umfasst. Ein Betrieb der Trackingbeleuchtungseinrichtung 27 kann durch die Steuereinrichtung 7 steuerbar sein, insbesondere ein Aktivierungszustand und/oder eine Intensität der von der Trackingbeleuchtungseinrichtung 27 im aktivierten Zustand erzeugten Strahlung.

Fig. 5 zeigt ein schematisches Blockschaltbild eines Mikroskopiesystems 1 in einer weiteren Ausführungsform. Das Mikroskopiesystem 1 umfasst eine Steuereinrichtung 7 und eine Trackingkamera 30 zur Lageerfassung mindestens eines Markers, welcher Bestandteil des in Fig. 1 dargestellten Targets 9 sein kann. Es ist möglich, dass das in Fig. 5 dargestellte Mikroskopiesystem 1 eine Trackingkamera 30 mit einem beweglichen optischen Element 32 (siehe Fig. 4) umfasst, dessen Lage zur Einstellung eines Erfassungsbereichs EB (siehe Fig. 7b) der Trackingkamera 30 veränderbar ist. Dies ist jedoch nicht zwingend. So kann das in Fig. 5 dargestellte Mikroskopiesystem 1 auch eine Trackingkamera 30 mit einem Festbrennweitenobjektiv, also ohne bewegliches optisches Element 32 zur Einstellung eines Erfassungsbereichs EB, umfassen. In Fig. 5 ist dargestellt, dass die Steuereinrichtung 7 über eine Signalverbindung mit zwei Trackingbeleuchtungseinrichtungen 27a, 27b verbunden ist. Hierbei kann die Steuereinrichtung 7 bzw. die Signalverbindung dieser Trackingbeleuchtungseinrichtungen 27a, 27b steuern, insbesondere den Aktivierungszustand jeder der beiden Trackingbeleuchtungseinrichtungen 27a, 27b und/oder die Intensität der von jeder der Trackingbeleuchtungseinrichtungen 27a, 27b im aktivierten Zustand erzeugten Strahlung.

Fig. 6 zeigt ein schematisches Blockschaltbild eines erfindungsgemäßen Mikroskopiesystems 1 in einer weiteren Ausführungsform. Dargestellt ist eine Steuereinrichtung 7 des Mikroskopiesystems 1, die eine Betriebsweise von den Trackingbeleuchtungseinrichtungen 27a, 27b gemäß der Funktionsweise der in Fig. 5 dargestellten Ausführungsform steuert. Weiter umfasst das Mikroskopiesystem 1 eine Trackingkamera 30 mit einem Bildsensor 34, einem Abschlussglas 26 und einer steuerbaren Blende 35. Weiter dargestellt ist, dass das Mikroskopiesystem 1 eine Kameraregeleinrichtung 36 umfasst, die eine Belichtungszeitdauer des Bildsensors 34 über die Einstellung von Zuständen der Blende 35 steuert. Diese Kameraregeleinrichtung 36 ist über eine Signalverbindung mit der Steuereinrichtung 7 verbunden. Über diese Signalverbindung können Informationen übermittelt werden, in welchen Zeiträumen eine Belichtung des Bildsensors 34 erfolgt und in welchen Zeitraum keine Belichtung erfolgt. Die Steuereinrichtung 7 kann dann die Betriebsweise der Trackingbeleuchtungseinrichtung 27a, 27b derart steuern, dass diese gepulst betrieben werden, wobei die Trackingbeleuchtungseinrichtungen 27a, 27b nur in Zeiträumen aktiviert werden (und somit Strahlung erzeugen), in dem die Blende 35 sich im geöffneten Zustand befindet und der Bildsensor 34 belichtet wird. Weiter dargestellt ist, dass die Trackingkamera 30 ein bewegliches optisches Element 32 wie bei der in Fig. 4 dargestellten Ausführungsform umfasst. Allerdings ist dies für die in Fig. 6 dargestellte Ausführungsform nicht zwingend notwendig, da die Trackingkamera 30 auch ein Festbrennweitenobjektiv umfassen kann.

Fig. 7a zeigt eine schematische Darstellung eines Erfassungsbereichs EB der Trackingkamera 30 für einen ersten Arbeitsabstand D1. Der Arbeitsabstand D1 bezeichnet hierbei einen Abstand entlang einer optischen Achse 17 des Mikroskops 2 zwischen einer gestrichelt dargestellten Referenz- oder Schärfenebene und dem z.B. in Fig. 1 dargestellten Abschlussglas 21 des Mikroskops 2. Weiter dargestellt ist ein Erfassungswinkel EW1 der Trackingkamera 30, der für einen ersten Arbeitsabstand D1 bestimmt wird. In Fig. 7b ist ein zweiter Arbeitsabstand D2 dargestellt, der größer als der in Fig. 7a dargestellte erste Arbeitsabstand D1 ist. Ebenfalls dargestellt ist ein weiterer Erfassungswinkel EW2, der für den weiteren Arbeitsabstand D2 eingestellt wird. Durch Zusammenschau der Fig. 7a und 7b ist ersichtlich, dass der weitere Erfassungswinkel EW2 der Trackingkamera 30 kleiner als der erste Erfassungswinkel EW2 ist, wenn der weitere Arbeitsabstand D2 größer als der erste Arbeitsabstand D1 ist. Die verschiedenen Erfassungswinkel EW1, EW2 können durch die Einstellung verschiedener Lagen des beweglichen optischen Elements 32 der Trackingkamera 30 eingestellt werden.

Fig. 8a zeigt eine schematische Ansicht eines Beleuchtungsbereichs BB bei einem ersten Arbeitsabstand D1 und Fig. 8b eine schematische Ansicht eines Beleuchtungsbereichs BB bei einem zweiten Arbeitsabstand D2. Dargestellt ist, dass ein Beleuchtungswinkel BW2, der für den zweiten Arbeitsabstand D2 eingestellt wird, kleiner ist als ein Beleuchtungswinkel BW1, der für den ersten Arbeitsabstand D1 eingestellt wird. Weiter dargestellt ist, dass beim ersten Arbeitsabstand D1 nur eine erste Trackingbeleuchtungseinrichtung 27a oder eine erste Gruppe von Trackingbeleuchtungseinrichtungen 27 (nicht dargestellt) aktiviert ist. Beim zweiten Arbeitsabstand D2 ist die erste Trackingbeleuchtungseinrichtung 27a deaktiviert und die Trackingbeleuchtungseinrichtungen 27b, 27c aktiviert. Auch können eine zweite und eine dritte Gruppe 31b, 31c von Trackingbeleuchtungseinrichtungen 27 aktiviert werden, wobei die erste Gruppe 31a von Trackingbeleuchtungseinrichtungen 27 deaktiviert ist.

Fig. 9a, Fig. 9b und Fig. 9c zeigen schematische Flussdiagramme eines erfindungsgemäßen Verfahrens in verschiedenen Ausführungsformen. In dem in Fig. 9a dargestellten Verfahren erfolgt eine Bestimmung B eines Arbeitsabstands D. Nach Bestimmung des Arbeitsabstands D erfolgt eine Einstellung E einer Lage des beweglichen optischen Elements 32 eines Mikroskopiesystems 1 (siehe Fig. 4) in Abhängigkeit des Arbeitsabstands D. Diese Lageeinstellung führt zu einer Einstellung des Erfassungswinkels EW1, EW2 (siehe Fig. 7a und Fig. 7b). In dem in Fig. 9a dargestellten Verfahren erfolgt ebenfalls die Bestimmung B eines Arbeitsabstands D. Dann erfolgt die Einstellung E_B einer Betriebsweise und/oder eines Beleuchtungsbereichs BB (siehe Fig. 8a) der Trackingbeleuchtungseinrichtungen 27, 27a, 27b, 27c (siehe z.B. Fig. 1 und Fig. 2). In dem in Fig. 9c dargestellten Verfahren erfolgt ebenfalls die Bestimmung B eines Arbeitsabstands D. Dann erfolgt die Einstellung E_L einer Lage des beweglichen optischen Elements 32 eines Mikroskopiesystems 1 sowie die Einstellung E_B einer Betriebsweise und/oder eines Beleuchtungsbereichs BB der Trackingbeleuchtungseinrichtung 27, 27a, 27b, 27c in Abhängigkeit des Arbeitsabstands D.

### Bezugszeichenliste

- 1: Mikroskopiesystem
- 2: Mikroskop
- 3: Stativ
- 4, 5, 6: Drehachsen
- 7: Steuereinrichtung
- 8: Benutzer
- 9: Target
- 12: Signalverbindung
- 13: Patient
- 14: Operationstisch
- 15: Okular
- 17: optische Achse
- 19: Instrument
- 21: Abschlussglas
- 22: Strahlengang für mikroskopischen Abbildung
- 23: Sichtfeldbeleuchtungseinrichtung
- 24: Mikroskopkörper
- 25: Strahlengang für die Trackingabbilderzeugung
- 26: Abschlussglas
- 27, 27a, 27b, 27c: Trackingbeleuchtungseinrichtung
- 28a, 28b, 28c: Linsenelement
- 29: Linsenverbundelement
- 30: Trackingkamera
- 31a, 31b, 31c: Gruppe
- 32: bewegliches optisches Element
- 33: Antriebseinrichtung
- 34: Bildsensor
- 35: Blende
- 36: Kameraregeleinrichtung
- EB: Erfassungsbereich
- BB: Beleuchtungsbereich
- D, D1, D2: Arbeitsabstand
- EW1, EW2: Erfassungswinkel
- BW1, BW2: Beleuchtungswinkel
- B: Bestimmung
- E_L: Einstellung der Lage
- E_B: Einstellung des Beleuchtungsbereichs und/oder Betriebsweise

## Patentansprüche

1. Mikroskopiesystem, umfassend mindestens eine Trackingkamera (30) zur Lageerfassung mindestens eines Markers,
**dadurch gekennzeichnet, dass**
das Mikroskopiesystem (1) weiter umfasst:
- mindestens eine Einrichtung zur Bestimmung eines Arbeitsabstands (D),
- mindestens ein bewegliches optisches Element (32), dessen Lage zur Einstellung eines Erfassungsbereichs (EB) der Trackingkamera (30) veränderbar ist und/oder mindestens zwei Trackingbeleuchtungseinrichtungen (27, 27a, 27b, 27c) und mindestens ein optisches Element zur Strahlführung der von den Trackingbeleuchtungseinrichtungen (27, 27a, 27b, 27c) erzeugten Strahlung,
- mindestens eine Steuereinrichtung (7) zur Steuerung des beweglichen optischen Elements (32) und/oder zur Steuerung der Trackingbeleuchtungseinrichtungen (27, 27a, 27b, 27c), wobei die Lage des beweglichen optischen Elements (32) in Abhängigkeit des Arbeitsabstands (D, D1, D2) einstellbar ist und/oder wobei eine Betriebsweise und/oder ein Beleuchtungsbereich der Trackingbeleuchtungseinrichtungen (27, 27a, 27b, 27c) in Abhängigkeit des Arbeitsabstands (D, D1, D2) einstellbar ist.

2. Mikroskopiesystem nach Anspruch 1, **dadurch gekennzeichnet, dass** für einen ersten Arbeitsabstand (D1) ein erster Erfassungswinkel (EW1) der Trackingkamera (30) und für mindestens einen weiteren Arbeitsabstand (D2) ein weiterer Erfassungswinkel (EW2) der Trackingkamera (30) eingestellt wird, wobei der erste Arbeitsabstand (D1) kleiner als der weitere Arbeitsabstand (D2) ist und der erste Erfassungswinkel (EW1) größer als der weitere Erfassungswinkel (EW2) ist.

3. Mikroskopiesystem nach Anspruch 1 oder 2, **dadurch gekennzeichnet, dass** eine Anzahl der aktivierten Trackingbeleuchtungseinrichtungen (27, 27a, 27b, 27c) und/oder eine Intensität der von den aktivierten Trackingbeleuchtungseinrichtungen (27, 27a, 27b, 27c) erzeugten Strahlung in Abhängigkeit des Arbeitsabstands (D, D1, D2) einstellbar ist.

4. Mikroskopiesystem nach Anspruch 3, **dadurch gekennzeichnet, dass** für einen ersten Arbeitsabstand (D1) eine erste Gesamtintensität der von den Trackingbeleuchtungseinrichtungen (27, 27a, 27b, 27c) erzeugten Strahlung eingestellt wird, wobei für einen weiteren Arbeitsabstand (D2) eine weitere Gesamtintensität der von den Trackingbeleuchtungseinrichtungen (27, 27a, 27b, 27c) erzeugten Strahlung eingestellt wird, wobei der erste Arbeitsabstand (D1) kleiner als der weitere Arbeitsabstand (D2) ist und die erste Gesamtintensität geringer als die weitere Gesamtintensität ist.

5. Mikroskopiesystem nach einem der vorangegangenen Ansprüche, **dadurch gekennzeichnet, dass** das Mikroskopiesystem (1) mehrere Gruppen (31a, 31b, 31c) von Trackingbeleuchtungseinrichtungen (27, 27a, 27b, 27c) umfasst, wobei eine Gruppe (31a, 31b, 31c) mindestens eine Trackingbeleuchtungseinrichtung (27, 27a, 27b, 27c) umfasst, wobei das Mikroskopiesystem (1) mindestens zwei optische Elemente zur Strahlführung umfasst, die verschiedenen Gruppen (31a, 31b, 31c) zugeordnet sind.

6. Mikroskopiesystem nach Anspruch 5, **dadurch gekennzeichnet, dass** mindestens zwei der Vielzahl von optischen Elementen zur Strahlführung voneinander verschiedene optische Eigenschaften aufweisen.

7. Mikroskopiesystem nach Anspruch 6, **dadurch gekennzeichnet, dass** der durch die optischen Eigenschaften eines ersten optischen Elements festgelegte Beleuchtungswinkel (BW1) des Beleuchtungsbereichs (BB) kleiner ist als der durch die optischen Eigenschaften eines weiteren optischen Elements festgelegte Beleuchtungswinkel (BW2) des Beleuchtungsbereichs (BB).

8. Mikroskopiesystem nach einem der vorangegangen Ansprüche, **dadurch gekennzeichnet, dass** optische Achsen der optischen Elemente zur Strahlführung sich in einem gemeinsamen Punkt schneiden.

9. Mikroskopiesystem nach einem der vorangegangenen Ansprüche, **dadurch gekennzeichnet, dass** die Trackingbeleuchtungseinrichtungen (27, 27a, 27b, 27c) gepulst betrieben werden, wobei die Zeitdauer eines aktivierten Zustands an eine Belichtungszeitdauer der Trackingkamera (30) angepasst ist.

10. Mikroskopiesystem nach einem der vorangegangenen Ansprüche, **dadurch gekennzeichnet, dass** das Mikroskopiesystem (1) eine Recheneinrichtung zur Bestimmung des Arbeitsabstands (D, D1, D2) umfasst.

11. Mikroskopiesystem nach einem der vorangegangen Ansprüche, **dadurch gekennzeichnet, dass** das Mikroskopiesystem (1) einen Strahlengang zur Erzeugung des mikroskopischen Abbilds umfasst oder ausbildet, wobei das Mikroskopiesystem (1) mindestens einen weiteren Strahlengang zur Erzeugung des Trackingabbilds umfasst, wobei die Strahlengänge voneinander verschieden sind.

12. Mikroskopiesystem nach einem der vorangegangen Ansprüche, **dadurch gekennzeichnet, dass** das Mikroskopiesystem (1) mindestens eine Sichtfeldbeleuchtungseinrichtung (23) umfasst, wobei die Sichtfeldbeleuchtungseinrichtung (23) von den Trackingbeleuchtungseinrichtungen (27, 27a, 27b, 27c) verschieden ist.

13. Mikroskopiesystem nach einem der vorangegangen Ansprüche, **dadurch gekennzeichnet, dass** genau zwei Lagen des beweglichen optischen Elements (32) wiederholgenau einstellbar sind.

14. Mikroskopiesystem nach Anspruch 13, **dadurch gekennzeichnet, dass** das bewegliche optisches Element (32) beweglich zwischen zwei Endanschlagelementen gelagert ist, wobei ein erstes Endanschlagelement ein erstes Lagerelement zur statischen Lagerung und ein weiteres Endanschlagelement ein weiteres Lagerelement zur statischen Lagerung aufweist oder ausbildet, wobei die Lagerelemente die Anschlaglagen des optischen Elements (32) wiederholgenau festlegen.

15. Verfahren zum Betreiben eines Mikroskopiesystems (1) nach einem der Ansprüche 1 bis 14, umfassend:
- das Bestimmen (B) eines Arbeitsabstands (D, D1, D2),
- das Einstellen einer Lage des beweglichen optischen Elements (32) in Abhängigkeit des Arbeitsabstands (D, D1, D2) und/oder
- das Einstellen (E_B) einer Betriebsweise und/oder eines Beleuchtungsbereichs (BB) der Trackingbeleuchtungseinrichtungen (27, 27a, 27b, 27c) in Abhängigkeit des Arbeitsabstands (D, D1, D2).
